(19) Europäisches Patentamt

European Patent Office

Office européen des brevets

(11) **EP 1 686 053 A2**

(12) **DEMANDE DE BREVET EUROPEEN**

(43) Date de publication:
**02.08.2006 Bulletin 2006/31**

(51) Int Cl.:
***B62K 5/04*** (2006.01)

(21) Numéro de dépôt: **06009662.5**

(22) Date de dépôt: **06.06.2002**

(84) Etats contractants désignés:
**AT BE CH CY DE DK ES FI FR GB GR IE IT LI LU MC NL PT SE TR**

(30) Priorité: **06.06.2001 FR 0107405**

(62) Numéro(s) de document de la (des) demande(s) initiale(s) en application de l'article 76 CBE:
**02743351.5 / 1 399 357**

(71) Demandeur: **S.A. 2P**
**94270 le Kremlin Bicetre (FR)**

(72) Inventeurs:
• **Patin, Pierre**
**75005 Paris (FR)**

• **Patin, Pierre-Armand**
**92190 Meudon (FR)**

(74) Mandataire: **Michelet, Alain et al**
**Cabinet Harlé et Phélip**
**7, rue de Madrid**
**75008 Paris (FR)**

Remarques:
Cette demande a été déposée le 10 - 05 - 2006 comme demande divisionnaire de la demande mentionnée sous le code INID 62.

(54) **Dispositif de blocage d'une articulation**

(57) L'invention a pour objet un dispositif de blocage d'une articulation comportant deux parties montées rotatives l'une sur l'autre autour d'un axe longitudinal, comprenant deux pièces solidaires en rotation, respectivement, de chacune des deux parties de l'articulation, respectivement une virole (61) centrée sur l'axe longitudinal d'articulation (x'x) et un bras (64) ayant une extrémité sur laquelle est suspendu un organe pendulaire de blocage (62) monté oscillant, autour d'un axe (63), sur ledit bras de suspension (64) et ayant une extrémité inférieure (66) prenant appui sur la virole (61) pour le blocage de l'articulation par arc-boutement de l'organe pendulaire (62) sur la virole (61), en cas de déviation angulaire du plan (P2) dans lequel est placé l'axe de suspension (63) par rapport à la direction de la verticale apparente déterminée par l'organe pendulaire (62).

L'invention s'applique spécialement à un véhicule articulé à trois roues.

-Fig. 2-

EP 1 686 053 A2

**Description**

L'invention a pour objet un dispositif de blocage d'une articulation, en particulier, pour un véhicule articulé à trois roues muni d'un dispositif de stabilisation.

On sait qu'il existe d'une façon générale, deux types de véhicules roulant sur le sol, d'une part les véhicules à trois ou quatre roues qui sont naturellement stables à l'arrêt et, d'autre part, les véhicules à deux roues qui ne sont stables qu'au dessus d'une vitesse minimale et que le conducteur peut incliner, dans les courbes, pour maintenir le centre de gravité dans le plan de la verticale apparente, c'est-à-dire la résultante de la pesanteur et de la force centrifuge.

Les véhicules habituels à quatre roues sont plus larges et moins maniables que les véhicules à deux roues qui, en revanche, ne peuvent pas, normalement, être équipés d'une caisse de protection contre les intempéries et les chocs. En effet, le conducteur doit avoir la possibilité de poser son pied sur le sol, au moment de l'arrêt, du côté où le véhicule s'incline par rapport à la verticale et, lors du démarrage, pour redresser son véhicule.

Depuis plusieurs années, on a cherché à résoudre ce problème en proposant un véhicule intermédiaire ayant deux roues écartées pour être stable à l'arrêt mais articulé de façon à se comporter, sur la route, comme un véhicule à deux roues à stabilisation dynamique, en s'inclinant dans les courbes pour compenser les effets de la force centrifuge.

Généralement, un tel véhicule repose sur trois roues et est constitué de deux châssis articulés l'un sur l'autre autour d'un axe longitudinal, respectivement un châssis arrière reposant sur deux roues écartées et un châssis avant reposant sur une roue directrice et portant une caisse de protection à l'intérieur de laquelle est placé au moins un siège pour le conducteur.

En déplacement, l'articulation est libre et permet au conducteur d'incliner le châssis avant, avec la caisse, pour maintenir le plan médian longitudinal de celle-ci dans l'alignement de la verticale apparente, le véhicule se comportant donc comme un motocycle. En revanche, lorsque le véhicule descend en dessous d'une certaine vitesse, l'articulation se bloque et le véhicule est stabilisé par son essieu arrière.

Des véhicules de ce type font l'objet de plusieurs brevets antérieurs du même inventeur, en particulier les documents FR-A-2600612, FR-A-2639016 et FR-A-2688465. Les documents GB-A-1561253, DE-A-3611417, US-A-4223795 décrivent également des véhicules articulés.

D'une façon générale, l'articulation comprend deux parties montées rotatives l'une sur l'autre et solidaires en rotation, respectivement des deux châssis et le blocage de l'articulation est assuré par un organe pendulaire soumis à l'action conjuguée de la pesanteur et de la force centrifuge et qui commande la solidarisation des deux parties de l'articulation lorsqu'il est dévié d'un côté ou de l'autre du plan médian du châssis inclinable. En particulier, lors de l'arrêt du véhicule, le châssis sur lequel est suspendu l'organe pendulaire s'incline d'un côté dès que la vitesse du véhicule descend au-dessous d'une certaine limite et cette inclinaison du plan médian par rapport à la verticale détermine un écartement du pendule qui commande le blocage de l'articulation et, par conséquent, la stabilisation du véhicule.

Ce moyen de blocage est, cependant, amovible car l'articulation doit pouvoir se débloquer dans l'autre sens pour permettre le redressement du véhicule, avec retour du pendule dans le plan médian du châssis.

Dans le mode de réalisation décrit dans la demande initiale WO 02/098722, le dispositif de blocage comprend un ensemble de barres articulées formant un parallélogramme déformable comportant deux traverses écartées sensiblement parallèles au sol, respectivement une première traverse solidaire en rotation du premier châssis et une seconde traverse articulée autour d'un axe longitudinal placé sur le second châssis, dans le plan médian de celui-ci, et deux montants s'étendant de part et d'autre dudit second plan médian, parallèlement à celui-ci. Dans ce cas, l'organe pendulaire de commande comprend une poutre rigide suspendue au premier châssis, s'étendant transversalement entre les deux montants et associée à des moyens de solidarisation en rotation d'au moins l'un des montants avec ladite poutre par déplacement de celle-ci vers l'un ou l'autre côté du second plan médian.

Dans un mode de réalisation plus simple, qui fait l'objet de la présente demande divisionnaire, le dispositif de blocage de l'articulation comporte une première partie solidaire en rotation d'un premier châssis et formant une virole entourant l'axe d'articulation des deux châssis et une seconde partie solidaire en rotation du second châssis et formant un bras s'étendant transversalement à l'axe d'articulation, à l'intérieur de la virole, et un organe pendulaire de commande comprenant une béquille suspendue à une extrémité dudit bras, autour d'un axe parallèle à l'axe d'articulation et placé dans le plan médian du second châssis, ladite béquille oscillant à l'intérieur de la virole et prenant appui sur celle-ci par une extrémité inférieure, en cas d'inclinaison du plan médian par rapport à la verticale apparente, avec blocage de l'inclinaison par arc-boutement de la béquille sur la virole.

Cet organe pendulaire peut commander le blocage de l'articulation lorsqu'il s'écarte du plan médian du second châssis et ceci peut se produire en cours de déplacement si le conducteur n'incline pas correctement la caisse du véhicule en maintenant le plan médian du second châssis en coïncidence avec la direction du pendule, c'est-à-dire la résultante de la pesanteur et de la force centrifuge.

Un tel système, comme on l'a décrit dans les brevets précédents du même inventeur, permet d'éviter des erreurs, en particulier pour un conducteur novice qui, étant enfermé dans la caisse du véhicule, risque de ne pas apprécier correctement l'inclinaison à donner à celle-ci. Ceci peut être préférable également lorsque le véhicule circule à une vitesse faible, par exemple, dans une circulation encombrée.

En revanche, lorsque le véhicule circule à une vitesse assez élevée pour assurer, naturellement, la stabilisation dynamique, il peut être préférable de supprimer tout risque de blocage anormal dû, par exemple, à un faux mouvement du conducteur ou à une irrégularité importante de la route.

Dans un mode de réalisation préférentiel, le véhicule comporte donc un dispositif amovible de verrouillage, en route, de l'organe pendulaire dans sa position médiane de déblocage de l'articulation et un moyen de commande du dispositif de verrouillage pour une vitesse du véhicule supérieure à un seuil donné.

Ainsi, à partir d'un certain seuil de vitesse qui peut être choisi par le constructeur ou éventuellement par le conducteur, le système de blocage de l'inclinaison ne joue plus, la caisse étant parfaitement libre et la conduite du véhicule rigoureusement identique à celle d'un véhicule normal à deux roues.

Un tel dispositif de verrouillage peut comprendre un verrou déplaçable entre une position écartée de libération de l'organe pendulaire et une position engagée pour le blocage de celui-ci dans sa position médiane, un moyen de détection de la vitesse du véhicule et un moyen de commande du déplacement du verrou de sa position écartée à sa position engagée, actionné par le moyen de détection lorsque la vitesse du véhicule dépasse un seuil donné.

De façon particulièrement avantageuse, le moyen de commande du déplacement du verrou de sa position écartée à sa position engagée est commandé électriquement à partir d'impulsions émises par un détecteur de vitesse, à un intervalle de temps $t_1$ inversement proportionnel à la vitesse de déplacement du véhicule, par l'intermédiaire d'un relais temporisé comprenant un circuit de réception des impulsions, un circuit de charge pour l'alimentation du moyen de commande pendant un temps $t_2$ à partir de l'impulsion, un premier circuit de fermeture du circuit de charge avec un temps donné t de retard après chaque impulsion et un second circuit de fermeture du circuit de charge pendant un temps donné $t_0$ à partir de l'impulsion, le circuit de charge étant ainsi fermé, de façon continue lorsque le temps $t_1$ entre deux impulsions est inférieur au temps de retard t du premier circuit de fermeture et ouvert, de façon continue, dans le cas contraire.

Mais l'invention sera mieux comprise par la description suivante de certains modes de réalisation particuliers, donnés à titre d'exemple, à titre non limitatifs et représentés sur les dessins annexés.

La Figure 1 est une vue, en perspective, d'un véhicule articulé muni d'un dispositif de blocage selon l'invention.

La Figure 2 est une vue schématique, en coupe longitudinale, d'un dispositif de blocage à pendule selon l'invention.

La Figure 3 est une vue de face du dispositif de blocage à pendule.

La Figure 4 montre, schématiquement, le fonctionnement du pendule et un dispositif de verrouillage.

La Figure 5 est un schéma d'alimentation électrique du dispositif de verrouillage.

Les Figures 6a, 6b, 6c sont des diagrammes illustrant le fonctionnement du dispositif électrique de verrouillage.

La Figure 7 montre, schématiquement, un système de commande hydraulique du verrouillage.

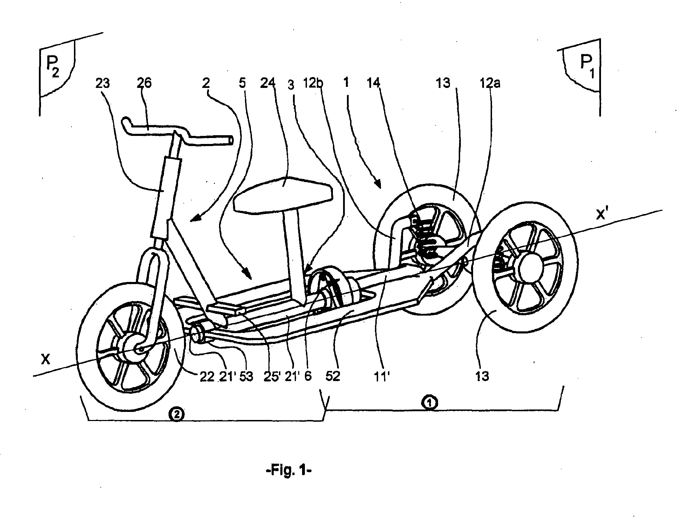

Sur la figure 1, on a représenté partiellement, en perspective, un véhicule articulé selon l'invention comprenant deux châssis, respectivement, un châssis arrière 1 et un châssis avant 2, articulés l'un sur l'autre autour d'un axe longitudinal x'x, par l'intermédiaire d'une articulation 3 comprenant un arbre central 21 et un fourreau tubulaire 11 montés rotatifs l'un sur l'autre par l'intermédiaire de paliers non représentés.

Le fourreau tubulaire 11 est solidaire du châssis arrière 1 et porte, à son extrémité arrière, deux bras 12a, 12b qui reposent sur un essieu arrière 13 prenant appui sur le sol par deux roues écartées tournant autour d'un axe transversal orthogonal à l'axe longitudinal x'x. L'arbre central 21 est solidaire du châssis avant 2 qui repose sur une roue avant directrice 22 montée sur une colonne de direction 23 et orientée par un guidon ou volant 26. D'autre part, le châssis avant 2 porte au moins un siège pour le conducteur et l'ensemble est enfermé dans une caisse de protection non représentée sur la figure.

Le châssis arrière 1 est centré sur un plan médian longitudinal P1 passant par l'axe d'articulation x'x et orthogonal au sol alors que le châssis avant 2 est centré sur un plan médian longitudinal P2 qui peut s'incliner d'un côté ou de l'autre par rapport au premier plan médian P1 en tournant autour de l'axe d'articulation x'x. Cependant, l'inclinaison du châssis avant 2 par rapport au châssis arrière 1 peut être empêchée par un dispositif 6 de blocage de l'articulation 3 commandé par un organe pendulaire.

D'une façon générale, le système de blocage de l'articulation comprend deux parties, solidaires, respectivement, des deux châssis articulés, à savoir une première partie solidaire en rotation du châssis arrière 1 et une seconde partie, solidaire en rotation du châssis avant 2. L'articulation peut donc être bloquée en solidarisant ces deux parties.

Le châssis arrière 1 repose, par l'intermédiaire d'une suspension 14, sur un essieu arrière 13 à deux roues écartées d'une distance suffisante pour assurer la stabilité à l'arrêt et, cependant, réduite pour ne pas augmenter l'encombrement du véhicule.

L'ensemble du châssis avant 2, portant la roue avant directrice 22 et au moins un siège 24 pour le conducteur, est entouré par une carrosserie formant une caisse fermée, qui n'est pas représentée sur la figure pour la clarté de celle-ci.

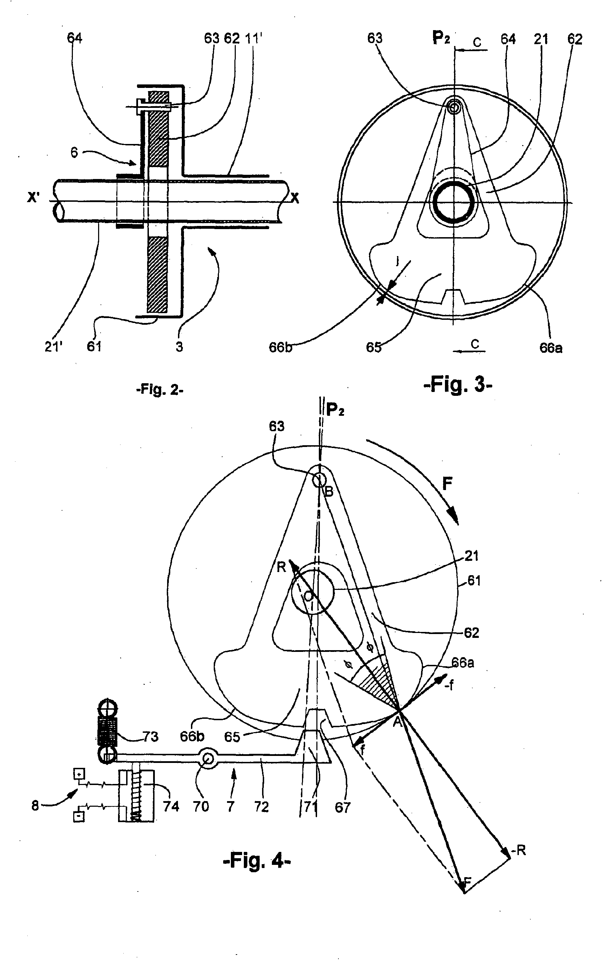

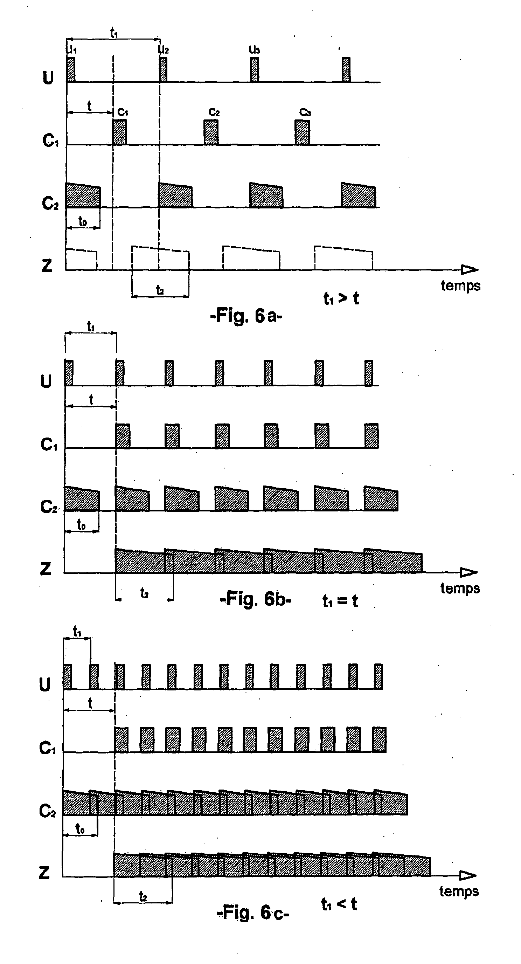

Dans ce mode de réalisation, l'articulation 3, représentée en détail sur la figure 2, comprend un arbre central 21 solidaire du châssis avant 2 et enfilé dans un fourreau tubulaire 11 solidaire du châssis arrière 1 et elle peut être bloquée par un dispositif amovible 6.

Ce dispositif de blocage 6 qui est représenté en détail sur les figures 2 et 3, comprend, essentiellement, un carter 61 fixé sur le fourreau tubulaire 11 du châssis arrière 1 et limité par une virole cylindrique à l'intérieur de laquelle est placé un pendule 62 suspendu autour d'un axe longitudinal 63 sur un bras 64 solidaire en rotation de l'arbre central 21 du châssis avant 2 et perpendiculaire à celui-ci.

L'arbre central 21 passe avec jeu dans une ouverture du pendule 62 qui peut ainsi osciller de part et d'autre du plan médian P2 du châssis avant 2 dans lequel est placé l'axe de suspension 63 du pendule 62. Celui-ci est équilibré par une masselotte inférieure 65 comprenant deux bossages 66a, 66b écartés de la face interne de la virole du carter 61 par un très faible jeu j.

De la sorte, lorsque le plan médian $P_2$ du châssis avant 2 s'incline par rapport à la direction de la verticale apparente déterminée par le pendule 62, le bossage 66 placé du côté vers lequel on s'incline vient en contact avec la virole 61, la forme des bossages 66 étant choisie pour assurer le meilleur contact possible lorsque celui-ci se produit.

La figure 4 montre le fonctionnement des forces en présence lorsque la caisse du véhicule, solidaire du châssis avant 2, tend à s'incliner, par exemple vers la droite, l'axe de suspension 63 du pendule porté par le bras 64 solidaire en rotation de l'arbre central 21 tendant à tourner autour de l'axe x'x dans le sens de la flèche F.

Le centre de gravité du pendule 62 s'écarte alors vers la droite par rapport au plan médian P2 et le bossage correspondant 66a de la masselotte 65 vient au contact de la virole 61 du carter en un point A. Il apparaît alors, entre ce point A et le centre B de l'axe d'articulation 63 du pendule 62, une force F qui est compensée par la réaction R du carter passant par le centre O de la virole 61.

Si l'on a :

$$f < \varphi.F$$

φ étant le coefficient de frottement du bossage 66 sur la surface interne de la virole 61 du carter, il y a arc-boutement de la béquille formée par le pendule 62 et, par conséquent, blocage de la rotation, les deux parties 11 et 21 étant solidarisées en rotation.

L'articulation 3 est bloquée, le châssis avant 2 restant légèrement incliné par rapport au sol.

Ainsi, lorsque le véhicule est en route, le conducteur peut s'incliner dans les courbes, en maintenant le plan médian P2 du châssis avant 2 dans le plan de la verticale apparente, c'est-à-dire la résultante de la pesanteur et de la force centrifuge. Le centre de gravité du pendule reste alors dans le plan médian P2 du châssis avant 2.

De ce fait, le véhicule se comporte, en route, comme un véhicule à deux roues à stabilité dynamique.

En revanche, lorsque le véhicule s'arrête, sa vitesse diminue au-dessous du seuil à partir duquel la stabilité ne peut plus être obtenue de façon dynamique. Le châssis avant 2 a donc tendance à s'incliner par rapport au sol et son plan médian P2 s'écarte d'un côté ou de l'autre par rapport au plan médian P1 du châssis arrière 1 qui reste perpendiculaire au sol.

Comme dans la demande initiale WO 02/098722, le véhicule est muni d'une plate-forme auxiliaire 5 permettant de redresser la caisse, au moment du démarrage, pour débloquer l'articulation et partir en ligne droite.

Dans le mode de réalisation de la figure 1, la plate-forme auxiliaire 5 est fixée, à l'arrière, sur le fourreau tubulaire 11 et comprend deux parties formant des repose-pieds 52 qui s'étendent de part et d'autre de l'arbre central 21 du châssis avant 2 et reposent sur celui-ci, à l'avant, par un palier 53 sur lequel tourne l'arbre 21 en cas d'inclinaison du châssis avant 2.

Le conducteur peut donc, après fermeture de la caisse, prendre appui sur l'un des repose-pieds 52, du côté vers lequel le châssis avant 2 est incliné, afin de redresser celui-ci pour débloquer l'articulation, le centre de gravité de la masselotte 65 revenant dans le plan médian $P_2$ du châssis avant 2. Lorsque le véhicule est en route, le conducteur prend appui sur deux repose-pieds 25 solidaires du châssis avant 2.

Cependant, le blocage de l'inclinaison de la caisse n'est nécessaire que pour une vitesse nulle ou très faible. Si le conducteur est assez expérimenté pour assurer la stabilité dynamique en inclinant sa caisse suivant le plan de la verticale apparente détectée par la position du pendule, il est préférable d'éviter tout risque de blocage intempestif qui pourrait être dû à un faux mouvement du conducteur ou à une irrégularité importante de la route.

C'est pourquoi, le système de blocage est muni, de préférence, d'un dispositif de verrouillage du pendule commandé à partir d'un seuil de vitesse. Au-dessus de cette vitesse qui correspond à celle à partir de laquelle la stabilité dynamique peut être assurée, la commande de blocage de l'articulation est verrouillée, la caisse étant parfaitement libre de s'incliner et la conduite du véhicule étant identique à celle d'un véhicule à deux roues.

Un tel dispositif de verrouillage 7 représenté schématiquement sur la figure 4 comporte, par exemple, un verrou 71 monté à l'extrémité d'un bras 72 tournant autour d'un axe 70 et pouvant s'engager dans une entaille 67 ménagée dans le plan médian de la masselotte 65.

Un ressort de rappel 73 agissant sur le bras 72 maintient le verrou 71 dans une position écartée permettant le fonctionnement du pendule et le blocage de l'articulation, en cas de besoin.

Cependant, un électro-aimant 74 actionné par un dispositif de contrôle 8 comprenant un moyen de mesure de vitesse permet, à partir d'un certain seuil de vitesse, d'engager le verrou 71 dans l'entaille 67 et, par conséquent, de bloquer le pendule 62 dans sa position d'équilibre libérant l'articulation. En dessous de ce seuil de vitesse, l'électro-aimant 74 ne fonctionne pas et le verrou 71, rappelé par le ressort 73, libère le pendule 62.

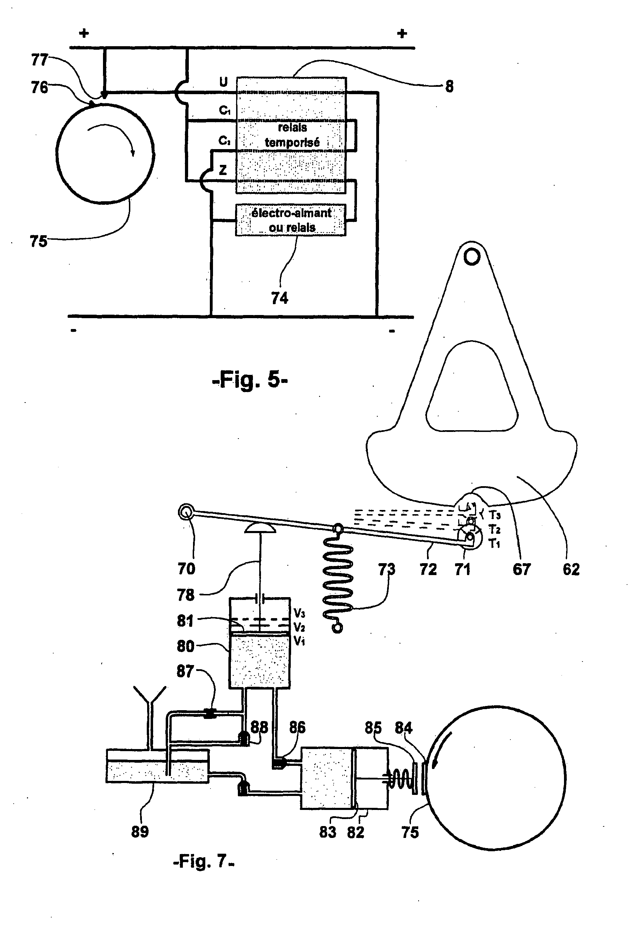

La figure 5 donne, à titre d'exemple, un schéma d'un système électrique de commande du verrou 71.

Le dispositif de mesure de vitesse comprend une roue 75 dite « roue phonique » associée, par exemple, à l'une des roues du véhicule ou tout pignon dont la vitesse de rotation est proportionnelle à la vitesse du véhicule.

Cette roue 75 porte un repère métallique en relief 76 dont le passage à proximité d'un capteur 77 fournit une impulsion dans un circuit U de réception d'un relais temporisé 8 comprenant, selon les appellations usuelles, des fonctions B ou C.

D'une façon générale, ce relais temporisé 8 comprend un circuit U qui reçoit les impulsions du capteur 77, deux circuits en série $C_1$ et $C_2$ qui constituent le circuit de commande et un circuit de charge Z qui alimente l'électro-aimant 74 ou, du moins, un relais de commande de cet électro-aimant.

Comme le montrent les figures 6a, 6b, 6c, le circuit de charge Z n'est pas alimenté tant que l'intervalle de temps $t_1$ entre deux impulsions $u_1$, $u_2$ est supérieur à une temporisation t et il est alimenté de façon continue dès que $t_1$ est inférieur à t. Une impulsion $U_1$ déclenche une courte fermeture du circuit $C_1$ mais seulement après un temps de retard t et une fermeture immédiate du circuit $C_2$ pendant un temps $t_0$ un peu inférieur à t.

Au démarrage, la vitesse est réduite et l'intervalle $t_1$ entre deux impulsions est largement supérieur à t. L'impulsion est sans effet, la continuité $C_1+C_2$ n'étant pas assurée (Figure 7a) et l'articulation 3 est bloquée. Lorsque la vitesse augmente, les impulsions se rapprochent. Dès que le temps $t_1$ entre deux impulsions successives devient égal au temps de retard t (Figure 7b), les circuits $C_1$ et $C_2$ se trouvent fermés simultanément, ce qui provoque l'alimentation du circuit de charge Z pendant une durée $t_2$ supérieure à t et par la suite une continuité de fermeture de ce circuit, tant que $t_1$ reste inférieur à t (Figure 7c).

L'électro-aimant 74 est alors alimenté et fait basculer le levier 72 tournant autour de l'axe 70 qui est solidaire, comme l'axe 63 de suspension du pendule, du plateau 64, lui-même solidaire en rotation du châssis avant 2. Le verrou 71 vient alors s'engager dans l'entaille 67 et le pendule 62 ainsi verrouillé dans sa position médiane ne peut produire aucun blocage entre les deux châssis avant 2 et arrière 1. Le véhicule se conduit alors comme un deux roues.

Inversement, si la vitesse diminue, le pendule 62 est déverrouillé lorsque $t_1$ devient supérieur à t et l'articulation se bloque pour assurer la stabilité du véhicule.

La Figure 7 montre schématiquement, à titre d'exemple, un autre système de commande du verrouillage et du déverrouillage du pendule 62.

Comme précédemment, le pendule 62 peut être bloqué dans sa position médiane par un verrou 71 qui peut être constitué, par exemple, d'un galet venant s'engager dans une encoche 67 du pendule 62. Ce verrou 71 est monté à l'extrémité d'un levier 72 pivotant autour d'un axe 70 et maintenu en position écartée par un ressort de rappel 73.

Dans le sens inverse, un poussoir 78 agissant contre l'action du ressort de rappel 73, permet de faire tourner le levier 72 pour engager le verrou 71 dans l'encoche 67.

Ce poussoir 78 est monté sur le piston 81 d'un vérin 80 ayant une chambre de pression alimentée par une pompe aspirante-refoulante 82 comprenant un corps cylindrique à l'intérieur duquel est monté coulissant un piston 83 actionné par une roue phonique 75 dont la vitesse de rotation est liée à la vitesse de déplacement du véhicule.

Le mouvement de va et vient du piston 83 est commandé, à cet effet, par un couple d'aimants permanents montés en opposition, c'est-à-dire avec les pôles de même nom face à face, l'un, 84 sur la roue 75 et l'autre, 85 à l'extrémité d'une tige reliée au piston 83. Un ressort 86 ramène le piston 83 en position de repos.

Le piston 83 reçoit ainsi une impulsion chaque fois que l'aimant 84 passe en face de l'aimant 85 et lance vers le vérin 80, à travers un clapet de non-retour 86, une certaine quantité de fluide qui déplace le piston 81 du vérin 80 d'une position $V_1$ à une position $V_2$ et, de ce fait, le galet 71 d'une position $T_1$ à une position $T_2$. Des actions analogues successives tendent à faire pénétrer le galet 71 dans l'encoche 47. Toutefois, le vérin est muni d'un orifice de fuite contrôlée 87 dont l'action d'amortissement conjuguée avec le rappel du ressort 73, place le mouvement du galet 71 sous la dépendance de la fréquence du mouvement de la pompe 82, c'est-à-dire, en définitive, sous l'influence de la vitesse du véhicule. Une soupape 88 limite la pression dans les circuits et ramène le fluide à un réservoir hors pression 89, quand la vitesse augmente.

Ce dispositif fonctionne comme suit :

- à l'arrêt, le ressort 73 refoule le fluide du vérin 80 vers le réservoir 89 à travers la fuite contrôlée 87, et le galet 71 se dégage de l'encoche 67. La masselotte 65 est libérée et le blocage fonctionne en cas d'inclinaison du véhicule ;
- lorsque le véhicule démarre, à la première coïncidence entre les positions des deux aimants 84 et 85, le piston 83 est repoussé et envoie au vérin 80 une certaine quantité de fluide qui fait passer le piston 81 d'une position $V_1$ à une position $V_2$ et le galet 71 d'une position $T_1$ à une position $T_2$. Cette position ne réalise pas encore le blocage de la masselotte.

Ce blocage n'est réalisé qu'à la suite d'une ou plusieurs actions semblables en fonction de la fréquence de répétition de l'action, de la valeur de la fuite contrôlée et de la caractéristique des ressorts qui déterminent à partir de quelle fréquence d'impulsions, c'est-à-dire, en pratique, à partir de quelle vitesse de déplacement du véhicule, la fuite est compensée par l'alimentation du vérin 80, et le galet 71 reste maintenu dans l'encoche 67. Le pendule 62 est alors immobilisé et la caisse 2 peut être inclinée librement pour assurer la stabilité dynamique.

L'invention ne se limite évidemment pas aux détails des modes de réalisation qui viennent d'être décrits à titre de simple exemple, d'autres variantes pouvant être imaginées sans s'écarter du cadre de protection défini par les revendications. Par exemple, il est avantageux de réaliser un véhicule à trois roues ayant un essieu arrière de stabilité et une roue avant directrice mais celle-ci pourrait aussi être remplacée par deux roues écartées.

Les signes de référence insérés après les caractéristiques techniques mentionnées dans les revendications, ont pour seul but de faciliter la compréhension de ces dernières et n'en limitent aucunement la portée.

**Revendications**

1. Dispositif de blocage d'une articulation comportant deux parties montées rotatives l'une sur l'autre autour d'un axe longitudinal, **caractérisé par le fait qu'**il comprend deux pièces solidaires en rotation, respectivement, de chacune des deux parties de l'articulation, respectivement une pièce en forme de virole (61) ayant une face interne cylindrique centrée sur l'axe longitudinal d'articulation (x'x) et une pièce en forme de bras (64) s'étendant transversalement à l'axe d'articulation et ayant une extrémité écartée dudit axe (x'x) sur laquelle est suspendu un organe pendulaire de blocage (62) monté oscillant sur ledit bras de suspension (64) autour d'un axe (63) parallèle à l'axe longitudinal d'articulation (x'x) et placé dans un plan (P2) passant par l'axe d'articulation (x'x) de façon à s'orienter à la manière d'un pendule suivant la direction de la verticale apparente, ledit organe pendulaire (62) ayant une extrémité inférieure (66) écartée par un faible jeu (j) de la face interne de la virole (61) de façon à prendre appui sur celle-ci pour le blocage de l'articulation par arc-boutement de l'organe pendulaire (62) sur la virole (61), en cas de déviation angulaire du plan (P2) dans lequel est placé l'axe de suspension (63) par rapport à la direction de la verticale apparente déterminée par l'organe pendulaire (62).

2. Dispositif selon la revendication 1, **caractérisé par le fait que** la virole (61) forme un carter à l'intérieur duquel s'étend un bras (64) de suspension de l'organe pendulaire de blocage (62).

3. Dispositif selon l'une des revendications 1 et 2, **caractérisé par le fait que** l'organe pendulaire de blocage est constitué d'une béquille (62) montée oscillante, à sa partie supérieure, autour d'un axe de suspension (63) et portant, à sa partie inférieure, une masselotte (65) comprenant deux bossages (66a, 66b) écartés de la face interne de la virole 61 par un très faible jeu (j).

4. Dispositif selon l'une des revendications 1, 2, 3 **caractérisé par le fait que** les deux parties de l'articulation sur lesquelles sont montés, respectivement, la virole cylindrique (61) et le bras de suspension (64) comprennent un arbre central (21) et un fourreau tubulaire (11) enfilés et montés rotatifs l'un sur l'autre par l'intermédiaire de paliers.

5. Dispositif selon la revendication 4, **caractérisé par le fait que** l'arbre central (21) passe avec jeu dans une ouverture ménagée dans l'organe pendulaire (62).

6. Véhicule articulé déplaçable sur le sol suivant une direction longitudinale, comprenant deux châssis (1,2) reliés l'un à l'autre par une articulation (3) tournant autour d'un axe longitudinal (x'x) parallèle à la direction de déplacement et ayant chacun un plan médian passant par l'axe d'articulation, respectivement un premier châssis (1) prenant appui sur le sol par un premier organe roulant (13) et centré sur un premier plan médian ($P_1$) perpendiculaire au sol, et un second châssis (2) prenant appui sur le sol par un second organe roulant (22) orientable par rapport à la direction de déplacement et centré sur un second plan médian ($P_2$) inclinable par rapport au sol par rotation autour de l'axe d'articulation (x'x), et un dispositif (6) de blocage amovible de l'articulation (3), **caractérisé par le fait que** le dispositif (6) de blocage de l'articulation (3) comporte une première partie solidaire en rotation du premier châssis (1) et formant une virole (61) entourant l'axe d'articulation (x'x) des deux châssis (1, 2) et une seconde partie solidaire en rotation du second châssis (2) et formant un bras (64) s'étendant transversalement à l'axe d'articulation (x'x), à l'intérieur de la virole (61), et est associé à un organe pendulaire de commande comprenant une béquille (62) suspendue à une extrémité dudit bras (64), autour d'un axe (63) parallèle à l'axe d'articulation (x'x) et placé dans le plan médian du second châssis, ladite béquille (62) oscillant à l'intérieur de la virole (61) et prenant appui sur celle-ci par une extrémité inférieure (66), en cas d'inclinaison du plan médian ($P_2$) par rapport à la direction de la béquille (62) avec arc-boutement de celle-ci sur la virole (61) et blocage de l'inclinaison du second châssis (2).

**7.** Véhicule articulé selon la revendication 6, **caractérisé par le fait qu'**il comprend un dispositif amovible (7) de verrouillage, en route, de l'organe pendulaire (4, 62) dans sa position médiane de déblocage de l'articulation et un moyen (72, 74) de commande du dispositif de verrouillage (7) pour une vitesse du véhicule supérieure à un seuil donné.

**8.** Véhicule articulé selon la revendication 7, **caractérisé par le fait que** le dispositif de verrouillage (7) comprend un verrou (71) déplaçable entre une position écartée de libération de l'organe pendulaire (4, 62) et une position engagée pour la fixation de celui-ci dans sa position médiane, un moyen (76, 84) de détection de la vitesse du véhicule et un moyen (72, 74) de commande du déplacement du verrou (71) de sa position écartée à sa position engagée, actionné par le moyen de détection (76, 84) lorsque la vitesse du véhicule dépasse un seuil donné.

**9.** Véhicule articulé selon la revendication 8, **caractérisé par le fait que** le moyen (72, 74) de commande du déplacement du verrou (71) de sa position écartée à sa position engagée est commandé électriquement à partir d'impulsions émises par un détecteur de vitesse, à un intervalle de temps $t_1$ inversement proportionnel à la vitesse de déplacement du véhicule, par l'intermédiaire d'un relais temporisé (8) comprenant un circuit U de réception des impulsions, un circuit de charge Z pour l'alimentation du moyen de commande (74) pendant un temps $t_2$ à partir de l'impulsion, un premier circuit $C_1$ de fermeture du circuit de charge Z avec un temps de retard t après chaque impulsion et un second circuit $C_2$ de fermeture du circuit de charge Z à partir de l'impulsion, pendant un temps $t_0$ inférieur audit temps de retard t, le circuit de charge Z étant ainsi fermé de façon continue lorsque le temps $t_1$ entre deux impulsions $u_1$, $u_2$ est inférieur au temps de retard t du premier circuit de fermeture ($C_1$) et ouvert, de façon continue, dans le cas contraire.

**10.** Véhicule articulé selon la revendication 8, **caractérisé par le fait que** le moyen de commande du déplacement du verrou (71) est un levier (72) repoussé dans le sens d'engagement du verrou (71), contre l'action d'un ressort de rappel (73), par un poussoir (78) solidaire du piston (81) d'un premier vérin (80) alimenté par un circuit (82) recevant des impulsions déterminant chacune le passage d'une certaine quantité de fluide hydraulique dans la chambre du vérin (80) pour repousser le piston (81) et le poussoir (78) dans le sens d'engagement du verrou (71), lesdites impulsions étant produites par un dispositif (75) de détection de vitesse à une fréquence dépendant de la vitesse de déplacement du véhicule.

-Fig. 1-

-Fig. 2-

-Fig. 3-

-Fig. 4-

-Fig. 6a-    $t_1 > t$

-Fig. 6b-    $t_1 = t$

-Fig. 6c-    $t_1 < t$

77
76
U
C₁
**relais temporisé**
C₁
Z
8
75

**électro-aimant ou relais**

74

**-Fig. 5-**

70
78
81
80
87
89
88
86
85
84
83
82
75
73
72
71
67
62

V₃
V₂
V₁

T₃
T₂
T₁

**-Fig. 7-**